# EUROPEAN PATENT SPECIFICATION

(11) **EP 3 432 625 B1**
(45) Date of publication and mention of the grant of the patent: **02.10.2019**
(21) Application number: 17181964.2
(22) Date of filing: 18.07.2017
(51) Int. Cl.: H04W 12/02, H04W 4/00, H04W 84/18, G06F 21/53

(54) **SECURE DEVICES AND METHODS FOR LPWA COMMUNICATION NETWORKS**
SICHERE VORRICHTUNGEN UND VERFAHREN FÜR LPWA-KOMMUNIKATIONSNETZWERKE
DISPOSITIF DE COMMUNICATION ET PROCÉDÉ DE COMMUNICATION RADIO

(43) Date of publication of application: 23.01.2019
(73) Proprietor: Deutsche Telekom AG, 53113 Bonn (DE); Giesecke+Devrient Mobile Security GmbH, 81677 München (DE)
(72) Inventor: SCHNIEDERS, Dominik, 52078 Aachen (DE); SPITZ, Stephan, 85757 Karlsfeld (DE)
(74) Representative: Braun-Dullaeus Pannen Emmerling Patent- & Rechtsanwaltspartnerschaft mbB

(56) References cited:
- US-A1- 2004 186 979

## Description

### TECHNICAL FIELD

In general, the invention relates to wireless communication networks. More specifically, the invention relates to secure devices, methods and systems for wireless communication networks based on Low-Power Wide-Area (LPWA) technology, in particular narrowband IoT communication networks.

### BACKGROUND

Narrowband IoT (NB IoT) is a new technology standard, designed to broaden the future of IoT connectivity. Ratified by the 3GPP, NB IoT is starting to being deployed by mobile network operators across the globe. NB IoT is a Low-Power Wide-Area (LPWA) network technology, developed to enable efficient communication for mass distributed NB IoT communication devices across wide geographical footprints as well in scenarios with deep indoor penetration, e.g. within an urban infrastructure. It's ideal for devices that generate low data traffic, rely on batteries and typically have a long device life cycle. A battery life of more than 10 years can be supported for a wide range of use cases. Moreover, NB IoT significantly improves the system capacity and spectrum efficiency, especially in deep coverage. Thus, NB IoT can be used to connect simple communication devices, such as sensors, to drive new data streams, reduce operational costs and create new business models. Smart Meters, Smart Bins, environmental monitoring and precision agriculture are just a few applications of NB IoT. Such devices are also referred to as NB IoT cellular devices. More information about NB IoT can be found in the 3GPP technical report TR 45.820.

Due to the generally limited hardware resources of a communication device based on LPWA technology and, in particular, NB IoT technology, security mechanisms known, for instance, from smart phones cannot be used for such a communication device. Thus, there is a need for improved devices, methods and systems for wireless communication networks based on LPWA technology, in particular narrowband IoT networks.

US 2004/0186979 A1 discloses a processor, in particular for chip cards, comprising a first calculating unit, a second calculating unit and a control unit for controlling the two calculating units such that they selectively operate in one of a plurality of operation modes. The plurality of operation modes include a security mode of operation, wherein the first calculating unit and the second calculating unit process the same data controlled by the same instructions in parallel. By comparing the results of this parallel processing, the operation security of the processor can be increased with respect to side channel attacks.

### SUMMARY OF THE INVENTION

It is an object of the invention to provide improved devices, methods and systems for wireless communication networks based on LPWA technology, in particular narrowband IOT networks.

The foregoing and other objects are achieved by the subject matter of the independent claims. Further implementation forms are apparent from the dependent claims, the description and the figures.

Embodiments of the present invention relate to communication devices that use NB IoT technology. Although the description is written by using the NB IoT as the access technology, the embodiments are applicable also for communication devices that use other wireless communication technologies as well, such as Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and/or 5G system. As used herein, NB IoT technology can comprises, for instance, narrowband LTE, narrowband M2M, and narrowband OFDMA techniques.

In embodiments of the present invention communication devices may be capable of communicating content, data, information and/or signals via a wireless medium or channel. In some embodiments, the wireless medium may include, for example, a radio channel, a cellular channel, an RF channel, a WiFi channel, an IR channel, a Bluetooth (BT) channel, a Global Navigation Satellite System (GNSS) channel, and the like.

In embodiments of the present invention communication devices may include one or more radio modules (or short radios) including circuitry and/or logic to perform wireless communication between the communication devices. In embodiments of the present invention the radio modules may include one or more wireless receivers (Rx) including circuitry and/or logic to receive wireless communication signals, RF signals, frames, blocks, transmission streams, packets, messages, data items, and/or data. In embodiments of the present invention the radio modules may include one or more wireless transmitters (Tx) including circuitry and/or logic to transmit wireless communication signals, RF signals, frames, blocks, transmission streams, packets, messages, data items, and/or data. In embodiments of the present invention, the radio modules may include Radio Frequency (RF) elements, baseband elements, modulation elements, demodulation elements, amplifiers, analog to digital and/or digital to analog converters, filters and the like, which can be implemented in hardware and/or software.

In embodiments of the present invention the radio modules may be configured to communicate according to an OFDM scheme and/or an FDMA scheme in an uplink direction and/or a downlink direction. In other embodiments, the radios of the communication devices may be configured to communicate according to any other additional or alternative modulation scheme. In embodiments of the present invention, the radios may include, or may be associated with, one or more antennas. In one example, a communication device may include a single antenna. In another example, a communication device may include two or more antennas. Such antennas may include any type of antennas suitable for transmitting and/or receiving wireless communication signals, blocks, frames, transmission streams, packets, messages and/or data. The antennas may include, for example, antennas suitable for directional communication, e.g., using beamforming techniques. For example, the antennas may include a phased array antenna, a multiple element antenna, a set of switched beam antennas, and/or the like. In some embodiments, the antennas may implement transmit and receive functionalities using separate transmit and receive antenna elements. In some embodiments, the antennas may implement transmit and receive functionalities using common and/or integrated transmit/receive elements.

In embodiments of the present invention a communication device may include a processor. The processor may be configured to perform and/or to trigger, cause, instruct and/or control the communication device to perform, one or more communications, to generate and/or communicate one or more messages and/or transmissions, and/or to perform one or more functionalities, operations and/or procedures. In embodiments of the present invention the processor control unit may include circuitry and/or logic, Media-Access Control (MAC) circuitry and/or logic, Physical Layer (PHY) circuitry and/or logic, and/or any other circuitry and/or logic, configured to perform the functionality of the processor.

In embodiments of the present invention, at least part of the functionality of the processor may be implemented by an integrated circuit, for example, a chip, e.g., a System on Chip (SoC). In one example, the chip or SoC may be configured to perform one or more functionalities of the radio as well. For example, the chip or SoC may include one or more elements of the processor and/or one or more elements of the radio. In one example, the processor and the radio may be implemented as part of the chip or SoC.

In embodiments of the present invention, the communication device can be a wearable device, a sensor, small device, a mobile device, and/or any other device, which may be, for example, powered by a battery and/or any other power source having a limited capacity.

In embodiments of the present invention, the communication device can be configured to communicate over one or more narrowband channels, for example, channels with a channel bandwidth of about 200 Kilohertz (KHz). In embodiments of the invention a minimum system bandwidth of 200 kHz on both downlink and uplink can be used. In each direction, the 200 kHz channel can be divided into narrow bandwidth subcarriers, for instance, 48 on the downlink and 36 on the uplink. In the downlink direction, Orthogonal Frequency Division Multiple Access (OFDMA) can be used. In the uplink direction Frequency Division Multiple Access (FDMA) can be used.

More specifically, according to a first aspect the invention relates to a communication device for communicating data over a low power wide area, LPWA, communication network, wherein the communication device comprises: a processor configured to implement a real-time execution environment based on a real-time operating system, wherein the real-time execution environment is configured to execute a first instance of an application; a memory configured to store data; a radio configured to transmit and/or receive data over the LPWA communication network; and a security system configured to operate one or more logically separated sets of security domains, including a first set of security domains, on the processor and the memory, wherein each set of security domains comprises a processor security domain and a memory security domain, wherein the security system is configured to operate the respective processor security domains of the one or more sets of security domains in parallel to the real-time execution environment and wherein the processor security domain of the first set of security domains is configured to execute a second instance of the application in response to the execution of the first instance of the application by the real-time execution environment.

Thus, an improved communication device for wireless communication networks based on LPWA technology, in particular narrowband IOT networks, is provided. The security system can be implemented in hardware and/or software. In an embodiment, the security system can be implemented using virtualization techniques.

In a further possible implementation form of the communication device according to the first aspect, the first instance of the application being executed by the real-time execution environment is configured to process input data into first output data and the second instance of the application being executed by the processor security domain of the first set of security domains is configured to process the input data into second output data, wherein the processor security domain of the first set of security domains is configured to compare the first output data with the second output data.

In a further possible implementation form of the communication device according to the first aspect, the processor security domain of the first set of security domains is configured to trigger one or more of the following counter measures, in case the first output data differs from the second output data: terminating the operation of the real-time execution environment and/or terminating the operation of the radio.

In a further possible implementation form of the communication device according to the first aspect, the processor security domain of the first set of security domains is configured to transmit a notification message via the radio to a remote network entity, in case the first output data differs from the second output data.

In a further possible implementation form of the communication device according to the first aspect, the processor security domain of the first set of security domains is configured to execute the second instance of the application in parallel or substantially in parallel with the execution of the first instance of the application by the real-time execution environment.

In a further possible implementation form of the communication device according to the first aspect, the memory comprises in addition to the respective memory security domains of the one or more sets of security domains a real-time memory portion that is configured to be accessible from the real-time execution environment and the respective processor security domains of the one or more sets of security domains.

In a further possible implementation form of the communication device according to the first aspect, the memory comprises a RAM, a ROM and/or a Flash memory.

In a further possible implementation form of the communication device according to the first aspect, the memory security domain of the first set of security domains comprises a cryptographic authentication key, wherein the processor security domain of the first set of security domains is configured to authenticate the communication device within the LPWA communication network using the cryptographic authentication key. In another embodiment, another of the one or more sets of security domains can comprise the cryptographic authentication key and be configured to authenticate the communication device within the LPWA communication network.

In a further possible implementation form of the communication device according to the first aspect, the processor, the memory and the radio are implemented as a system on a chip.

In a further possible implementation form of the communication device according to the first aspect, the communication device further comprises a communication bus, wherein the communication bus is configured to exchange data between the processor, the memory and the radio.

In a further possible implementation form of the communication device according to the first aspect, the communication device further comprises a sensor configured to collect data, wherein the input data comprises sensor data.

In a further possible implementation form of the communication device according to the first aspect, the communication device further comprises an actuator being controllable by actuator data, wherein the first output data and the second output data comprise actuator data.

In a further possible implementation form of the communication device according to the first aspect, the communication device is configured to communicate over a narrowband loT communication network.

According to a second aspect the invention relates to a corresponding method of operating a communication device for communicating data over a low power wide area, LPWA, communication network, the communication device comprising a processor configured to implement a real-time execution environment based on a real-time operating system, a memory configured to store data, a radio configured to transmit and/or receive data over the LPWA communication network, and a security system configured to operate one or more logically separated sets of security domains, including a first set of security domains, on the processor and the memory, wherein each set of security domains comprises a processor security domain and a memory security domain, wherein the security system is configured to operate the respective processor security domains of the one or more sets of security domains in parallel to the real-time execution environment. The method comprises: executing a first instance of an application by the real-time execution environment; and executing a second instance of the application by the processor security domain of the first set of security domains in response to the execution of the first instance of the application by the real-time execution environment.

Thus, an improved communication method for wireless communication networks based on LPWA technology, in particular narrowband IOT networks, is provided.

The method according to the second aspect of the invention can be performed by the communication device according to the first aspect of the invention and its different embodiments. Thus, further features of the method according to the second aspect of the invention result directly from the functionality of the communication device according to the first aspect of the invention and its different embodiments and implementation forms.

According to a third aspect the invention relates to a computer program product comprising program code for performing the method according to the second aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a NB IoT communication network comprising a communication device according to an embodiment;
Fig. 2 shows a more detailed schematic diagram of a communication device according to an embodiment; and
Fig. 3 shows a diagram illustrating a method for operating a communication device according to an embodiment.

In the various figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

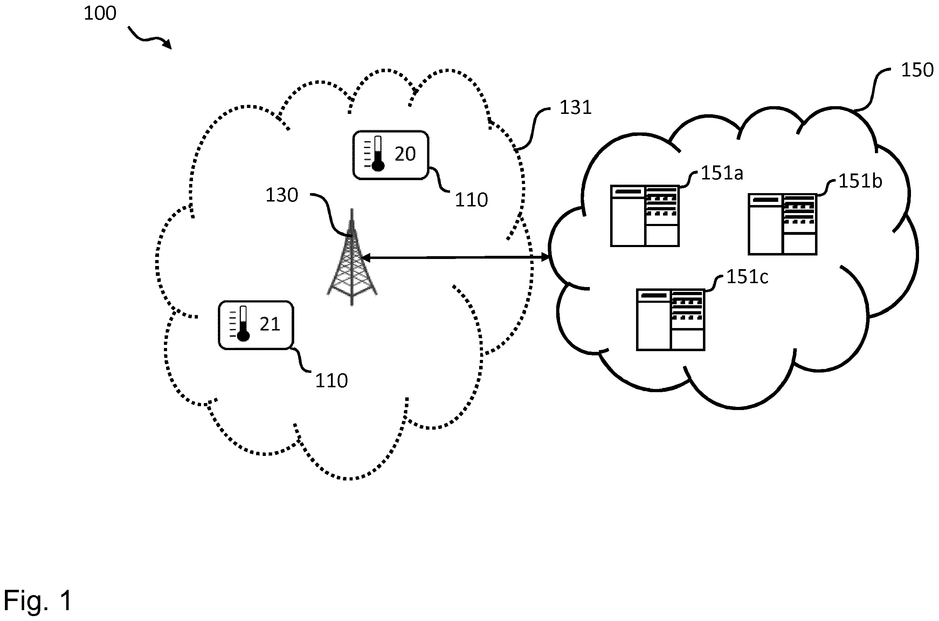

Figure 1 shows a schematic diagram of a cellular communication network 100. The cellular communication network 100 is a low-power wide-area (LPWA) communication network 100, in particular a LPWA communication network 100 based on narrowband (NB) IoT technology, as described, for instance, in the 3GPP technical report TR 45.820.

The cellular communication network 100 comprises a radio access network 131, a core network 150 and a plurality of NB IoT communication devices 110. In the exemplary embodiment shown in figure 1, the plurality of NB IoT communication devices are smart temperature sensors configured to monitor temperature data and to provide the temperature data via the core network 150 of the NB IoT communication network 100 to one or more network entities 151a, 151b, in particular network servers, configured to collect and analyze the temperature data from the plurality of NB IoT communication devices 110.

For the sake of clarity figure 1 shows only a single exemplary base station 130, which is part of the radio access network 131. In other embodiments the radio access network 131 can comprises a plurality of base stations similar to the exemplary base station 130 shown in figure 1.

The core network 150 comprises entities or functions for operating the NB IoT communication network 100. In the exemplary embodiment, shown in figure 1 the core network 150 comprises an authentication entity 151c configured to perform an authentication procedure with each of the NB IoT communication devices 110 before granting full access to the NB IoT communication network 100.

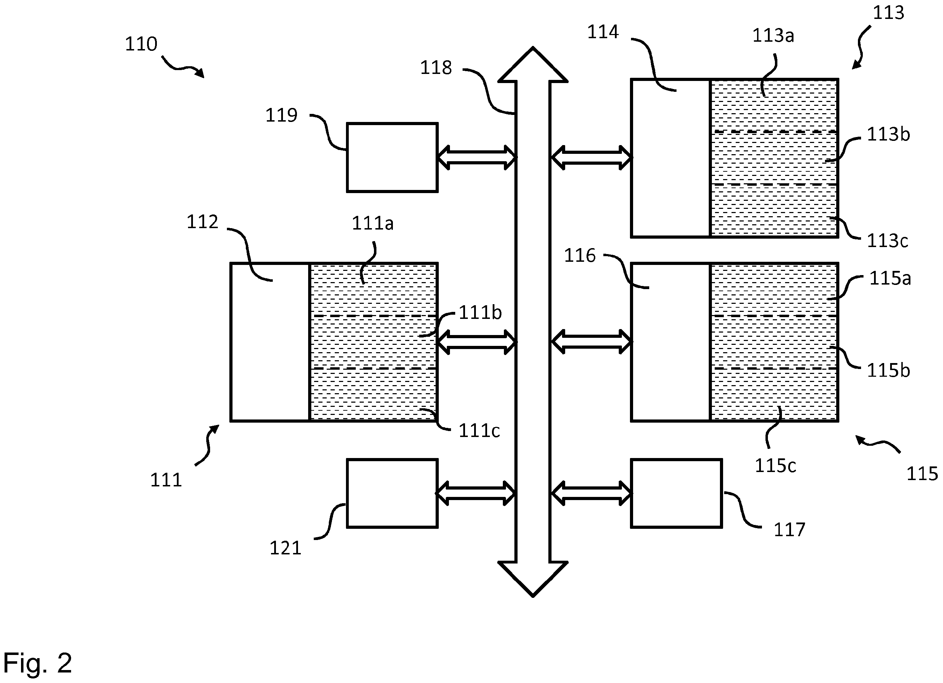

Under further reference to figure 2 in the following an embodiment of the NB IoT communication device 110 will be described. The communication device 110 comprises a processor 111 configured to implement a real-time execution environment 112 based on a real-time operating system. The communication device 110 further comprises a memory comprising a RAM 113 and a Flash memory 115 configured to store volatile and non-volatile data (in particular executable application code), respectively, and a radio 117 configured to transmit and/or receive data over the NB IoT communication network 100. In an embodiment, the radio 117 can be configured to use one or more subcarriers of a channel bandwidth of about 200 Kilohertz (KHz) to communicate with the base station 130 on the basis of an OFDMA scheme in the downlink direction and on the basis of a FDMA scheme in the uplink direction. Alternatively to or in addition to the Flash memory 115 the communication device 110a can comprise a ROM as well.

In an embodiment, the processor 111, the RAM 113, the Flash memory 115 and/or the radio 117 can be implemented as a system on a chip. As illustrated in figure 2, in an embodiment the communication device 110a further comprises a communication bus system 118 configured to provide for the flow of data between the processor 111, the RAM 113, the Flash memory 115 and the radio 117.

The communication device 110 further comprises a security system configured to operate one or more logically separated sets of security domains 111a-c, 113a-c, 115a-c, including a first set of security domains 111a, 113a, 115a, on the processor 111 and the memory, i.e. the volatile RAM 113 and the non-volatile Flash memory 115, wherein each set of security domains comprises a processor security domain 111a-c and a memory security domain 113a-c, 115a-c. In the exemplary embodiment shown in figure 2 the security system comprises three sets of logically separated security domains 111a-c, 113a-c, 115a-c, namely the first set of security domains 111a, 113a, 115a, comprising a processor security domain 111a, a RAM security domain 113a and a Flash memory security domain 115a, and a second and a third set of security domains 111b,c, 113b,c, 115b,c, comprising a respective processor security domain 111b,c, a respective RAM security domain 113b,c and a respective Flash memory security domain 115b,c. As already mentioned, the respective security domains of a set of security domains, for instance, the processor security domain 111a, the RAM security domain 113a and the Flash memory security domain 115a of the first set of security domains are logically separated from the security domains of the other sets of security domains.

As illustrated in figure 2, the security system is configured to operate the respective processor security domains 111a-c of the one or more sets of security domains 111a-c, 113a-c, 115a-c in parallel to the real-time execution environment 112 so that the respective processor security domains 111a-c of the one or more sets of security domains 111a-c, 113a-c, 115a-c have access to the real-time execution environment 112, whereas the real-time execution environment 112 cannot access the respective processor security domains 111a-c of the one or more sets of security domains 111a-c, 113a-c, 115a-c.

The real-time execution environment 112 is configured to execute a first instance of an application and the processor security domain 111a of the first set of security domains 111a, 113a, 115a is configured to execute a second instance of the same application in response to the execution of the first instance of the application by the real-time execution environment 112.

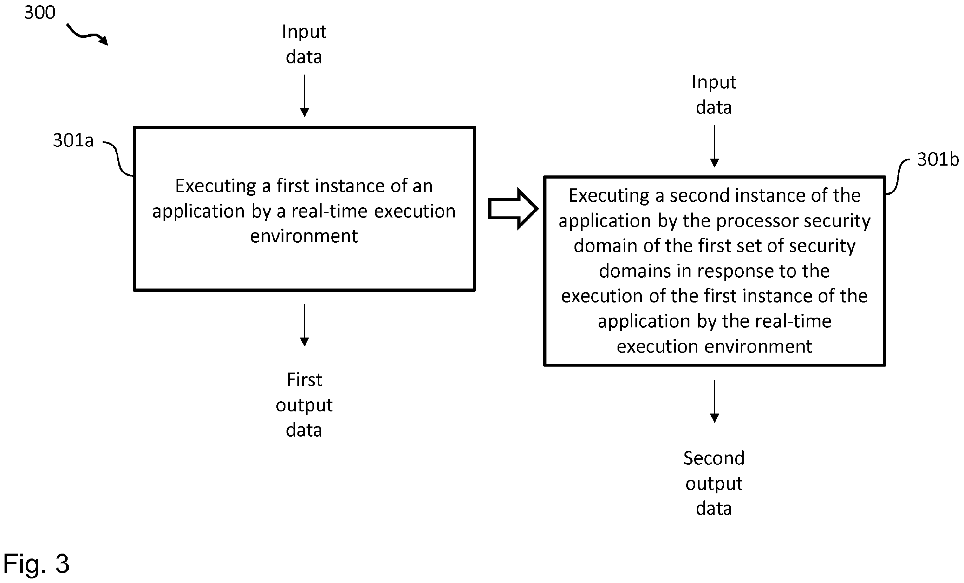

In an embodiment, the first instance of the application being executed by the real-time execution environment 112 is configured to process input data into first output data and the second instance of the application being executed by the processor security domain 111a of the first set of security domains 111a, 113a, 115a is configured to process the input data into second output data, as illustrated in figure 3, which will be described in more detail further below.

In an embodiment, the processor security domain 111a of the first set of security domains 111a, 113a, 115a is configured to compare the first output data, i.e. the output data generated by the first instance of the application running in the real-time execution environment 112 on the basis of the input data, with the second output data, i.e. the output data generated by the second instance of the same application being executed by the processor security domain 111a of the first set of security domains 111a, 113a, 115a on the basis of the same input data. In case the result of this comparison is that the first output data differs from the second output data, which may be the result of an externally induced malfunction of the real-time execution environment 112, the processor security domain 111a of the first set of security domains 111a, 113a, 115a can trigger appropriate counter measures, such as terminating the operation of the real-time execution environment 112, terminating the operation of the radio 117 and the like. Moreover, in an embodiment, the processor security domain 111a of the first set of security domains 111a, 113a, 115a is configured to transmit a corresponding error message via the radio 117 to the remote network management entity 151a,b, in case the first output data differs from the second output data.

As illustrated in figure 3, the processor security domain 111a of the first set of security domains can be configured to execute the second instance of the application in parallel or substantially in parallel to the execution of the first instance of the application by the real-time execution environment 112.

As illustrated in figure 2 and already mentioned above, the communication device 110 can further comprise a sensor 119 configured to collect sensor data, for instance, temperature data. In an embodiment, the input data provided to the first and second instance of the application can comprise sensor data. The security system can be configured to restrict access to the sensor to one or more selected sets of the one or more sets of security domains 111a-c, 113a-c, 115a-c.

Moreover, the communication device 110 can further comprises an actuator 121 being controllable by actuator data, such as actuator defining a time interval for triggering an operation. In an embodiment, the first output data generated by the first instance of the application and the second output data generated by the second instance of the application comprise actuator data. The security system can be configured to restrict access to the actuator 121 to one or more selected sets of the one or more sets of security domains 111a-c, 113a-c, 115a-c.

In an embodiment, the first set of security domains 111a, 113a, 115a is further configured to authenticate the communication device 110 within the NB loT communication network 100 in an authentication procedure with the authentication entity 151c. To this end, a cryptographic authentication key can be stored in the Flash memory security domain 115a of the first set of security domains 111a, 113a, 115 and the processor security domain 111a can be configured to run an authentication application for authenticating the communication device 110 using the cryptographic authentication key. In a further embodiment, another set of security domains can be configured to authenticate the communication device 110 within the NB IoT communication network 100.

The security system of the communication device 110 shown in figure 2 can be implemented in hardware and/or software. In an embodiment, the security system can be implemented using virtualization techniques. In an embodiment, the different RAM security domains 113a-c can be provided by different partitions of the RAM 113. In an embodiment, the data in the different RAM security domains 113a-c are accessible using "memory mapped I/O". As will be appreciated, the main purpose of the security system of the communication device 110a and its security domains is to isolate the processing of security critical tasks from standard processing in the real-time execution environment 112. This can be achieved by using a single processor-core having two execution modes, one secure mode and another mode for standard processes. In this case the RAM and registers assigned to the single core are duplicated and one set is assigned to the normal mode, i.e. the real-time execution environment 112, and the other set to the secure execution mode, i.e. the secure execution environment. According to another embodiment, the security system of the communication device 110a and its security domains can be implemented using a multi-processor-core architecture with at least one secure-core with an own RAM, which is dedicated to executing only security-critical processes.

In an embodiment, both the RAM 113 and the Flash memory 115 can comprise in addition to the respective RAM security domains 113a-c and the Flash memory security domains 115a-c a real-time RAM portion 114 and a real-time Flash memory portion 116, which can be accessed from the real-time execution environment 112 of the processor 111 and the respective processor security domains 111a-c of the three sets of security domains.

Figure 3 shows a corresponding method 300 of operating the communication device 110 for communicating data over the LPWA communication network 100, wherein the communication device 110 comprises the processor 111 configured to implement the real-time execution environment 112 based on a real-time operating system, the memory 113, 115 configured to store data, the radio 117 configured to transmit and/or receive data over the LPWA communication network 100, and the security system configured to operate the one or more logically separated sets of security domains 111a-c, 113a-c, 115a-c, including the first set of security domains 111a, 113a, 115a, on the processor 111 and the memory 113, 115, wherein each set of security domains comprises a processor security domain 111a-c and a memory security domain 113a-c, 115a-c and wherein the security system is configured to operate the respective processor security domains 111a-c of the one or more sets of security domains 111a-c, 113a-c, 115a-c in parallel to the real-time execution environment 112. The method 300 comprises a step 301a of executing a first instance of an application by the real-time execution environment 112 and a step 301b of executing a second instance of the application by the processor security domain 111a of the first set of security domains 111a, 113a, 115a in response to the execution of the first instance of the application by the real-time execution environment 112.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention as defined by the claims.

## Claims

1. A communication device (110) for communicating data over a low power wide area, LPWA, communication network (100), wherein the communication device (110) comprises:
a processor (111) configured to implement a real-time execution environment (112) based on a real-time operating system, wherein the real-time execution environment (112) is configured to execute a first instance of an application;
a memory (113, 115) configured to store data;
a radio (117) configured to transmit and/or receive data over the LPWA communication network (100); and
a security system configured to operate one or more logically separated sets of security domains (111a-c, 113a-c, 115a-c), including a first set of security domains (111a, 113a, 115a), on the processor (111) and the memory (113, 115), wherein each set of security domains comprises a processor security domain (111a-c) and a memory security domain (113a-c, 115a-c), wherein the security system is configured to operate the respective processor security domains (111a-c) of the one or more sets of security domains (111a-c, 113a-c, 115a-c) in parallel to the real-time execution environment (112) and wherein the processor security domain (111a) of the first set of security domains (111a, 113a, 115a) is configured to execute a second instance of the application in response to the execution of the first instance of the application by the real-time execution environment (112).

2. The communication device (110) of claim 1, wherein the first instance of the application being executed by the real-time execution environment (112) is configured to process input data into first output data and the second instance of the application being executed by the processor security domain (111a) of the first set of security domains (111a, 113a, 115a) is configured to process the input data into second output data, wherein the processor security domain (111a) of the first set of security domains (111a, 113a, 115a) is configured to compare the first output data with the second output data.

3. The communication device (110) of claim 1 or 2, wherein the processor security domain (111a) of the first set of security domains (111a, 113a, 115a) is configured to trigger one or more of the following counter measures, in case the first output data differs from the second output data: terminating the operation of the real-time execution environment (112) and/or terminating the operation of the radio (117).

4. The communication device (110) of any one of the preceding claims, wherein the processor security domain (111a) of the first set of security domains (111a, 113a, 115a) is configured to transmit a notification message via the radio (117) to a remote network entity (151), in case the first output data differs from the second output data.

5. The communication device (110) of any one of the preceding claims, wherein the processor security domain (111a) of the first set of security domains (111a, 113a, 115a) is configured to execute the second instance of the application in parallel or substantially in parallel with the execution of the first instance of the application by the real-time execution environment (112).

6. The communication device (110) of any one of the preceding claims, wherein the memory (113, 115) comprises in addition to the respective memory security domains (113a-c, 115a-c) of the one or more sets of security domains (111a-c, 113a-c, 115a-c) a real-time memory portion (114, 116) that is configured to be accessible from the real-time execution environment (112) and the respective processor security domains (111a-c) of the one or more sets of security domains (111a-c, 113a-c, 115a-c).

7. The communication device (110) of any one of the preceding claims, wherein the memory (113, 115) comprises a RAM (113), a ROM and/or a Flash memory (115).

8. The communication device (110) of any one of the preceding claims, wherein the memory security domain (113a, 115a) of the first set of security domains (111a, 113a, 115a) comprises a cryptographic authentication key and wherein the processor security domain (111a) of the first set of security domains (111a, 113a, 115a) is configured to authenticate the communication device (110) within the LPWA communication network (100) using the cryptographic authentication key.

9. The communication device (110) of any one of the preceding claims, wherein the processor (111), the memory (113, 115) and the radio (117) are implemented as a system on a chip.

10. The communication device (110) of any one of the preceding claims, wherein the communication device (110) further comprises a communication bus (118), wherein the communication bus (118) is configured to exchange data between the processor (111), the memory (113, 115) and the radio (117).

11. The communication device (110) of any one of the preceding claims, wherein the communication device (110) further comprises a sensor (119) configured to collect data and wherein the input data comprise sensor data.

12. The communication device (110) of any one of the preceding claims, wherein the communication device (110) further comprises an actuator (121) being controllable by actuator data and wherein the first output data and the second output data comprise actuator data.

13. The communication device (110) of any one of the preceding claims, wherein the communication device (110) is configured to communicate over a narrowband loT communication network (100).

14. A method (300) of operating a communication device (110) for communicating data over a low power wide area, LPWA, communication network (100), the communication device (110) comprising a processor (111) configured to implement a real-time execution environment (112) based on a real-time operating system, a memory (113, 115) configured to store data, a radio (117) configured to transmit and/or receive data over the LPWA communication network (100), and a security system configured to operate one or more logically separated sets of security domains (111a-c, 113a-c, 115a-c), including a first set of security domains (111a, 113a, 115a), on the processor (111) and the memory (113, 115), wherein each set of security domains comprises a processor security domain (111a-c) and a memory security domain (113a-c, 115a-c), wherein the security system is configured to operate the respective processor security domains (111a-c) of the one or more sets of security domains (111a-c, 113a-c, 115a-c) in parallel to the real-time execution environment (112), wherein the method (300) comprises:
executing (301a) a first instance of an application by the real-time execution environment (112); and
executing (301b) a second instance of the application by the processor security domain (111a) of the first set of security domains (111a, 113a, 115a) in response to the execution of the first instance of the application by the real-time execution environment (112).

15. A computer program product comprising program code for performing the method (300) of claim 14, when executed on a computer or a processor.

## Patentansprüche

1. Kommunikationsvorrichtung (110) zum Kommunizieren von Daten über ein energiesparendes Weitbereichs-, LPWA, Kommunikationsnetzwerk (100), wobei die Kommunikationsvorrichtung (110) umfasst:
einen Prozessor (111), der konfiguriert ist, eine Echtzeit-Ausführungsumgebung (112) basierend auf einem Echtzeit-Betriebssystem zu implementieren, wobei die Echtzeit-Ausführungsumgebung (112) konfiguriert ist, eine erste Instanz einer Anwendung auszuführen;
einen Speicher (113, 115), der konfiguriert ist, Daten zu speichern;
ein Funkgerät (117), das konfiguriert ist, Daten über das LPWA-Kommunikationsnetzwerk (100) zu senden und/oder zu empfangen; und
ein Sicherheitssystem, das konfiguriert ist, einen oder mehrere logisch getrennte Sätze von Sicherheitsdomänen (111a-c, 113a-c, 115a-c), einschließlich eines ersten Satzes von Sicherheitsdomänen (111a, 113a, 115a), auf dem Prozessor (111) und dem Speicher (113, 115) zu betreiben, wobei jeder Satz von Sicherheitsdomänen eine Prozessorsicherheitsdomäne (111a-c) und eine Speichersicherheitsdomäne (113a-c, 115a-c) umfasst, wobei das Sicherheitssystem konfiguriert ist, die jeweiligen Prozessorsicherheitsdomänen (111a-c) des einen oder der mehreren Sätze von Sicherheitsdomänen (111a-c, 113a-c, 115a-c) parallel zu der Echtzeit-Ausführungsumgebung (112) zu betreiben, und wobei die Prozessorsicherheitsdomäne (111a) des ersten Satzes von Sicherheitsdomänen (111a, 113a, 115a) konfiguriert ist, eine zweite Instanz der Anwendung als Reaktion auf die Ausführung der ersten Instanz der Anwendung durch die Echtzeit-Ausführungsumgebung (112) auszuführen.

2. Kommunikationsvorrichtung (110) nach Anspruch 1, wobei die erste Instanz der Anwendung, die durch die Echtzeit-Ausführungsumgebung (112) ausgeführt wird, konfiguriert ist, Eingabedaten in erste Ausgabedaten zu verarbeiten, und die zweite Instanz der Anwendung, die durch die Prozessorsicherheitsdomäne (111a) des ersten Satzes von Sicherheitsdomänen (111a, 113a, 115a) ausgeführt wird, konfiguriert ist, die Eingabedaten in zweite Ausgabedaten zu verarbeiten, wobei die Prozessorsicherheitsdomäne (111a) des ersten Satzes von Sicherheitsdomänen (111a) 111a, 113a, 115a) konfiguriert ist, die ersten Ausgabedaten mit den zweiten Ausgabedaten zu vergleichen.

3. Kommunikationsvorrichtung (110) nach Anspruch 1 oder 2, wobei die Prozessorsicherheitsdomäne (111a) des ersten Satzes von Sicherheitsdomänen (111a, 113a, 115a) konfiguriert ist, eine oder mehrere der folgenden Gegenmaßnahmen auszulösen, falls sich die ersten Ausgangsdaten von den zweiten Ausgangsdaten unterscheiden: Beenden des Betriebs der Echtzeit-Ausführungsumgebung (112) und/oder Beenden des Betriebs des Funkgeräts (117).

4. Kommunikationsvorrichtung (110) nach einem der vorhergehenden Ansprüche, wobei die Prozessorsicherheitsdomäne (111a) des ersten Satzes von Sicherheitsdomänen (111a, 113a, 115a) konfiguriert ist, eine Benachrichtigungsnachricht über das Funkgerät (117)) an eine entfernte Netzwerkentität (151) zu senden, falls sich die ersten Ausgabedaten von den zweiten Ausgabedaten unterscheiden.

5. Kommunikationsvorrichtung (110) nach einem der vorhergehenden Ansprüche, wobei die Prozessorsicherheitsdomäne (111a) des ersten Satzes von Sicherheitsdomänen (111a, 113a, 115a) konfiguriert ist, die zweite Instanz der Anwendung parallel oder im Wesentlichen parallel zu der Ausführung der ersten Instanz der Anwendung durch die Echtzeit-Ausführungsumgebung (112) auszuführen.

6. Kommunikationsvorrichtung (110) nach einem der vorhergehenden Ansprüche, wobei der Speicher (113, 115) zusätzlich zu den jeweiligen Speichersicherheitsdomänen (113a-c, 115a-c) des einen oder der mehreren Sätze von Sicherheitsdomänen (111a-c, 113a-c, 115a-c) einen Echtzeit-Speicherabschnitt (114, 116) umfasst, der konfiguriert ist, von der Echtzeit-Ausführungsumgebung (112) und den jeweiligen Prozessorsicherheitsdomänen (111a-c) des einen oder der mehreren Sätze von Sicherheitsdomänen (111a-c, 113a-c, 115a-c) zugreifbar zu sein.

7. Kommunikationsvorrichtung (110) nach einem der vorhergehenden Ansprüche, wobei der Speicher (113, 115) einen RAM (113), einen ROM und/oder einen Flash-Speicher (115) umfasst.

8. Kommunikationsvorrichtung (110) nach einem der vorhergehenden Ansprüche, wobei die Speichersicherheitsdomäne (113a, 115a) des ersten Satzes von Sicherheitsdomänen (111a, 113a, 115a) einen kryptografischen Authentifizierungsschlüssel umfasst, und wobei die Prozessorsicherheitsdomäne (111a) des ersten Satzes von Sicherheitsdomänen (111a, 113a, 115a) konfiguriert ist, die Kommunikationsvorrichtung (110) innerhalb des LPWA-Kommunikationsnetzwerks (100) unter Verwendung des kryptografischen Authentifizierungsschlüssels zu authentifizieren.

9. Kommunikationsvorrichtung (110) nach einem der vorhergehenden Ansprüche, wobei der Prozessor (111), der Speicher (113, 115) und das Funkgerät (117) als ein System auf einem Chip implementiert sind.

10. Kommunikationsvorrichtung (110) nach einem der vorhergehenden Ansprüche, wobei die Kommunikationsvorrichtung (110) ferner einen Kommunikationsbus (118) umfasst, wobei der Kommunikationsbus (118) konfiguriert ist, Daten zwischen dem Prozessor (111), dem Speicher (113, 115) und dem Funkgerät (117) auszutauschen.

11. Kommunikationsvorrichtung (110) nach einem der vorhergehenden Ansprüche, wobei die Kommunikationsvorrichtung (110) ferner einen Sensor (119) umfasst, der konfiguriert ist, Daten zu sammeln, und wobei die Eingabedaten Sensordaten umfassen.

12. Kommunikationsvorrichtung (110) nach einem der vorhergehenden Ansprüche, wobei die Kommunikationsvorrichtung (110) ferner einen Aktuator (121) umfasst, der durch Aktuatordaten steuerbar ist, und wobei die ersten Ausgangsdaten und die zweiten Ausgangsdaten Aktuatordaten umfassen.

13. Kommunikationsvorrichtung (110) nach einem der vorhergehenden Ansprüche, wobei die Kommunikationsvorrichtung (110) konfiguriert ist, über ein Schmalband-IoT-Kommunikationsnetzwerk (100) zu kommunizieren.

14. Verfahren (300) zum Betreiben einer Kommunikationsvorrichtung (110) zum Kommunizieren von Daten über ein energiesparendes Weitbereichs-, LPWA, Kommunikationsnetzwerk (100), wobei die Kommunikationsvorrichtung (110) einen Prozessor (111), der konfiguriert ist, eine Echtzeit-Ausführungsumgebung (112) basierend auf einem Echtzeit-Betriebssystem zu implementieren, einen Speicher (113, 115), der konfiguriert ist, Daten zu speichern, ein Funkgerät (117), das konfiguriert ist, Daten über das LPWA-Kommunikationsnetz (100) zu senden und/oder zu empfangen, und ein Sicherheitssystem, das konfiguriert ist, einen oder mehrere logisch getrennte Sätze von Sicherheitsdomänen (111a-c, 113a-c, 115a-c), einschließlich eines ersten Satzes von Sicherheitsdomänen (111a, 113a, 115a), auf dem Prozessor (111) und dem Speicher (113, 115) zu betreiben, umfasst, wobei jeder Satz von Sicherheitsdomänen eine Prozessorsicherheitsdomäne (111a-c) und eine Speichersicherheitsdomäne (113a-c, 115a-c) umfasst, wobei das Sicherheitssystem konfiguriert ist, die jeweiligen Prozessorsicherheitsdomänen (111a-c) des einen oder der mehreren Sätze von Sicherheitsdomänen (111a-c, 113a-c, 115a-c) parallel zu der Echtzeit-Ausführungsumgebung (112) zu betreiben, wobei das Verfahren (300) umfasst:
Ausführen (301a) einer ersten Instanz einer Anwendung durch die Echtzeit-Ausführungsumgebung (112); und
Ausführen (301b) einer zweiten Instanz der Anwendung durch die Prozessorsicherheitsdomäne (111a) des ersten Satzes von Sicherheitsdomänen (111a, 113a, 115a) als Reaktion auf die Ausführung der ersten Instanz der Anwendung durch die Echtzeit Ausführungsumgebung (112).

15. Computerprogrammprodukt, umfassend Programmcode zum Durchführen des Verfahrens (300) nach Anspruch 14, wenn es auf einem Computer oder einem Prozessor ausgeführt wird.

## Revendications

1. Dispositif de communication (110) pour communiquer des données via un réseau de communication étendu à faible puissance, LPWA (100), dans lequel le dispositif de communication (110) comprend :
un processeur (111) configuré pour implémenter un environnement d'exécution en temps réel (112) sur la base d'un système d'exploitation en temps réel dans lequel l'environnement d'exécution en temps réel (112) est configuré pour exécuter une première instance d'une application ;
une mémoire (113, 115) configurée pour mémoriser des données ;
une radio (117) configurée pour transmettre et/ou recevoir des données via le réseau de communication LPWA (100) ; et
un système de sécurité configuré pour faire fonctionner un ou plusieurs ensemble de domaines de sécurité séparés logiquement (111a-c, 113a-c, 115a-c), incluant un premier ensemble de domaines de sécurité (111a, 113a, 115a), sur le processeur (111) et la mémoire (113, 115), dans lequel chaque ensemble de domaines de sécurité comprend un domaine de sécurité de processeur (111a-c) et un domaine de sécurité de mémoire (113a-c, 115a-c), dans lequel le système de sécurité est configuré pour faire fonctionner les domaines de sécurité de processeurs respectifs (111a-c) du ou des ensembles de domaines de sécurité (111a-c, 113a-c, 115a-c) en parallèle à l'environnement d'exécution en temps réel (112) et dans lequel le domaine de la sécurité de processeur (111a) du premier ensemble de domaines de sécurité (111a, 113a, 115a) est configuré pour exécuter une seconde instance de l'application en réponse à l'exécution de la première instance de l'application par l'environnement d'exécution en temps réel (112).

2. Dispositif de communication (110) selon la revendication 1, dans lequel la première instance de l'application étant exécutée par l'environnement d'exécution en temps réel (112) est configuré pour traiter des données d'entrée en premières données de sortie et la seconde instance de l'application étant exécutée par le domaine de sécurité de processeur (111a) du premier ensemble de domaines de sécurité (111a, 113a, 115a) est configurée pour traiter les données d'entrée en seconde données de sortie, dans lequel le domaine de sécurité de processeur (111a) du premier ensemble de domaines de sécurité (111a, 113a, 115a) est configuré pour comparer les premières données de sortie avec les secondes données de sortie.

3. Dispositif de communication (110) selon la revendication 1 ou 2, dans lequel le domaine de sécurité de processeur (111a) du premier ensemble de domaines de sécurité (111a, 113a, 115a) est configuré pour déclencher une ou plusieurs des contre-mesures suivantes, au cas où les premières données de sortie diffèrent des secondes données de sortie : mettre fin au fonctionnement de l'environnement d'exécution en temps réel (112 et/ou mettre fin au fonctionnement de la radio (117).

4. Dispositif de communication (110) selon une quelconque des revendications précédentes, dans lequel le domaine de sécurité de processeur (111a) du premier ensemble de domaines de sécurité (111a, 113a, 115a) est configuré pour transmettre un message de notification via la radio (117) à une entité de réseau distante (151), au cas où les premières données de sortie diffèrent des secondes données de sortie.

5. Dispositif de communication (110) selon une quelconque des revendications précédentes, dans lequel le domaine de sécurité (111a) de processeur du premier ensemble de sécurité (111a, 113a, 115a) est configuré pour exécuter la seconde instance de l'application en parallèle ou substantiellement en parallèle à l'exécution de la première instance de l'application par l'environnement d'exécution temps réel (112).

6. Dispositif de communication (110) selon une quelconque des revendications précédentes, dans lequel la mémoire (113, 115) comprend en plus des domaines de sécurité de mémoire respectifs (113a-c, 115a-c) du ou des ensembles de domaines de sécurité (111a-c, 113a-c, 115a-c) une portion de mémoire en temps réel (114, 116) qui est configurée pour être accessible à partir de l'environnement d'exécution en temps réel (112) et les domaines de sécurité de processeurs respectifs (111a-c) du ou des ensembles de domaines de sécurité (111a-c, 113a-c, 115a-c).

7. Dispositif de communication (110) selon une quelconque des revendications précédentes, dans lequel la mémoire (113, 115) comprend une RAM (113), ROM et une mémoire flash (115).

8. Dispositif de communication (110) selon une quelconque des revendications précédentes, dans lequel le domaine de sécurité de mémoire (113a, 115a) du premier ensemble de domaines de sécurité (111a, 113a, 115a) comprend une clé d'authentification cryptographique et dans lequel le domaine de sécurité de processeur (111a) du premier ensemble de domaines de sécurité (111a, 113a, 115a) est configuré pour authentifier le dispositif de communication (110) à l'intérieur du réseau de communication LPWA (100) en utilisant la clé d'authentification cryptographique.

9. Dispositif de communication (110) selon une quelconque des revendications précédentes, dans lequel le processeur (111), la mémoire (113, 115) et la radio (117) sont implémentés comme un système sur une puce.

10. Dispositif de communication (110) selon une quelconque des revendications précédentes, dans lequel le dispositif de communication (110) comprend en outre un bus de communication (118), dans lequel le bus de communication est configuré pour échanger des données entre le processeur (111), la mémoire (113, 115) et la radio (117).

11. Dispositif de communication (110) selon une quelconque des revendications précédentes, dans lequel le dispositif de communication (110) comprend en outre un capteur (119) et dans lequel les données d'entrée comprennent des données de capteur.

12. Dispositif de communication (110) selon une quelconque des revendications précédentes, dans lequel le dispositif de communication (110) comprend en outre un actionneur (121) pouvant être commandé par des données d'actionneur et dans lequel les premières données de sortie et les secondes données de sortie comprennent des données d'actionneur.

13. Dispositif de communication (110) selon une quelconque des revendications précédentes, dans lequel le dispositif de communication (110) est configuré pour communiquer via un réseau de communication IoT à bande étroite (100).

14. Procédé (300) de fonctionnement d'un dispositif de communication (110) pour communiquer des données via un réseau de communication étendu à faible puissance LPWA (100), le dispositif de communication (110) comprenant un processeur (111) configuré pour implémenter un environnement d'exécution en temps réel (112) sur la base d'un système d'exploitation en temps réel, une mémoire (113, 115) configurée pour mémoriser des données, une radio (117) configurée pour transmettre et/ou recevoir des données via le réseau de communication LPWA (100), et un système de sécurité configuré pour faire fonctionner un ou plusieurs ensembles des domaines de sécurité séparés logiquement (111a-c, 113a-c, 115a-c) incluant un premier ensemble de domaines de sécurité (111a, 113a, 115a), sur le processeur (111)et la mémoire (113, 115), dans lequel chaque ensemble de domaines de sécurité comprend un domaine de sécurité de processeur (111a-c) et un domaine de la sécurité de mémoire (113a-c, 115a-c), dans lequel le système de sécurité est configuré pour faire fonctionner les domaines de sécurité de processeur respectifs (111a-c) du ou des ensembles des domaines de sécurité (111a-c, 113a-c, 115a-c) de l'environnement d'exécution en temps réel (112), dans lequel le procédé (300) comprend de :
exécuter (301a) une première instance de l'application par l'environnement d'exécution en temps réel (112) ; et
exécuter (301b) une seconde instance de l'application par le domaine de sécurité de processeur (111a) du premier ensemble de domaines de sécurité (111a, 113a, 115a) en réponse à l'exécution de la première instance de l'application par l'environnement d'exécution en réel (112).

15. Projet de programme informatique comprenant du programme pour mettre en oeuvre le procédé (300) selon la revendication 14 lorsqu'il est exécuté sur un ordinateur ou un processeur.
